(19) Europäisches Patentamt
European Patent Office
Office européen des brevets

(11) **EP 2 142 941 B1**

(12) **FASCICULE DE BREVET EUROPEEN**

(45) Date de publication et mention
de la délivrance du brevet:
**27.06.2012 Bulletin 2012/26**

(21) Numéro de dépôt: **08736267.9**

(22) Date de dépôt: **16.04.2008**

(51) Int Cl.:
***G01S 13/36*** (2006.01)

(86) Numéro de dépôt international:
**PCT/EP2008/054588**

(87) Numéro de publication internationale:
**WO 2008/135355 (13.11.2008 Gazette 2008/46)**

(54) **PROCEDE DE DEPOLLUTION DE SIGNAUX POUR UN ANTIBROUILLAGE CENTRALISE.**

VERFAHREN ZUM SÄUBERN VON SIGNALEN FÜR ZENTRALISIERTES ANTISTÖREN

METHOD FOR CLEANING SIGNALS FOR CENTRALISED ANTIJAMMING

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **17.04.2007 FR 0702778**

(43) Date de publication de la demande:
**13.01.2010 Bulletin 2010/02**

(73) Titulaire: **THALES
92200 Neuilly-sur-Seine (FR)**

(72) Inventeurs:
• **FUSS, Amaury
78830 Bonnelles (FR)**
• **SAVY, Laurent
92170 Vanves (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
• **SCOTT I ET AL: "A sparse approach in partially
adaptive linearly constrained arrays"
ACOUSTICS, SPEECH, AND SIGNAL
PROCESSING, 1994. ICASSP-94., 1994 IEEE
INTERNATIONAL CONFERENCE ON ADELAIDE,
SA, AUSTRALIA 19-22 APRIL 1994, NEW YORK,
NY, USA,IEEE, vol. iv, 19 avril 1994 (1994-04-19),
pages IV-541, XP010134087 ISBN: 0-7803-1775-0**

• **OTIS LAMONT FROST: "An algorithm fot linearly
constrained adaptive array processing"
PROCEEDINGS OF THE IEEE, IEEE. NEW YORK,
US, vol. 60, no. 8, août 1972 (1972-08), pages
926-935, XP002113432 ISSN: 0018-9219 cité dans
la demande**

• **HA JONG SUNG ET AL: "An optimum space-time
MTI processor for airborne radar" ACOUSTICS,
SPEECH AND SIGNAL PROCESSING, 1998.
PROCEEDINGS OF THE 1998 IEEE
INTERNATIONAL CONFERENCE ON SEATTLE,
WA, USA 12-15 MAY 1998, NEW YORK, NY, USA,
IEEE, US, vol. 4, 12 mai 1998 (1998-05-12), pages
2033-2036, XP010279733 ISBN: 0-7803-4428-6**

• **RABIDEAU D J: "Optimal linear constraints and
subspace adaptive filtering" SENSOR ARRAY
AND MULTICHANNEL SIGNAL PROCESSING
WORKSHOP. 2000. PROCEEDINGS OF THE 2000
IEEE 16-17 MARCH 2000, PISCATAWAY, NJ, USA,
IEEE, 16 mars 2000 (2000-03-16), pages 310-314,
XP010516101 ISBN: 0-7803-6339-6**

• **MARCELLO L R DE CAMPOS ET AL:
"Constrained Adaptation Algorithms Employing
Householder Transformation" IEEE
TRANSACTIONS ON SIGNAL PROCESSING,
IEEE SERVICE CENTER, NEW YORK, NY, US, vol.
50, no. 9, septembre 2002 (2002-09), XP011080225
ISSN: 1053-587X**

• **LIN QU ET AL: "An Efficient Adaptive
Beamforming Techniquewith Pattern Control
Ability" ITS TELECOMMUNICATIONS
PROCEEDINGS, 2006 6TH INTERNATIONAL
CONFERENCE ON, IEEE, PI, juin 2006 (2006-06),
pages 378-381, XP031012440 ISBN:
0-7803-9586-7**

**Description**

La présente invention concerne un procédé de dépollution de signaux pour un antibrouillage centralisé. Elle s'applique notamment aux systèmes radars, notamment aux systèmes radars aéroportés.

Les évolutions techniques en matière de radar ont permis d'évoluer vers la réalisation de radars multivoies, c'est à dire des radars utilisant plusieurs sous-réseaux d'antennes. Ce type de radar permet notamment de faire de la formation de faisceaux par le calcul et offre une meilleure capacité d'antibrouillage que les radars à antenne unique. Généralement, les systèmes d'antibrouillage associés aux radars multivoies appliquent un coefficient pondérateur $w_i$ à chacun des signaux $x_i$ issus des N sous-réseaux d'antennes avant de les combiner pour former une « voie somme » $y$ selon la formulation suivante :

$$y = w^H \cdot x = \sum_{i=1}^{N} wi^H \cdot xi = \sum_{i=1}^{N} yi, \qquad (1)$$

$()^H$ étant l'opérateur hermitien.
Le vecteur de filtrage w contenant les coefficients pondérateurs $wi$ est déterminé par un algorithme d'antibrouillage en vue de diminuer le gain de l'antenne dans les directions d'arrivée des signaux indésirables, tout en respectant un certain nombre de contraintes permettant de conserver une bonne réception du signal utile.

Un inconvénient majeur de ce procédé d'antibrouillage est la perte de la caractéristique multivoies du radar, puisque seule la voie somme $y$ est dépolluée. Les signaux $yi$ issus de chaque pondération $wi.xi$ des sous-réseaux d'antennes ne sont pas réutilisables séparément, privant ainsi l'utilisateur du radar des nombreuses possibilités de traitements adaptatifs spatio-temporels, applicables notamment à la détection de cibles mouvantes et à l'imagerie par radar à synthèse d'ouverture. D'autre part, du point de vue de l'architecture d'un système et plus particulièrement de ses interfaces, ce procédé d'antibrouillage n'est pas transparent car il transforme un ensemble de N signaux en un seul signal de sortie. La mise en oeuvre d'un tel procédé au sein d'une chaîne de réception radar multivoies existante peut notamment restreindre les possibilités d'ajout de dispositifs d'exploitation en aval puisqu'elle modifie le nombre de sorties.

Des méthodes sont connues pour produire en sortie d'un dispositif d'antibrouillage autant de voies dépolluées que de sous-réseaux d'antennes. Il s'agit de calculer selon un algorithme itératif les coefficients pondérateurs de chacune des voies dépolluées. Cependant, les contraintes de fonctionnement en temps réel étant souvent requises sur les systèmes radar, cette méthode nécessite des moyens de calcul considérables et n'est par conséquent pas compatible avec les limites matérielles inhérentes aux systèmes embarqués.

Dans le cas d'un antibrouillage classique sur un système radar à N sous-réseaux d'antennes, on peut, à partir d'une matrice de covariance de bruit Γ de dimension N x N, déterminer un vecteur wde filtrage permettant de réduire le gain de l'antenne dans les directions des signaux brouilleurs. La matrice de covariance r est par exemple établie lors d'une phase d'écoute sans émission préalable d'impulsions par le radar. La puissance $P_0$ reçue par le radar après pondération des voies des sous-réseaux par le vecteur w de filtrage est alors :

$$P_0 = \mathbf{w} \cdot \boldsymbol{\Gamma} \cdot \mathbf{w}$$

On peut alors utiliser l'algorithme « Linear Constraint Minimum Variance » ou LCMV, proposé par Frost en 1972, pour minimiser cette puissance de sortie $P_0$ tout en préservant un diagramme d'antenne permettant une réception satisfaisante des signaux utiles. Ainsi, la recherche du vecteur de filtrage w peut être formulée comme un problème de minimisation sous contraintes exprimé sous la forme suivante :

$$\begin{cases} P_0 = \min_{\mathbf{w}} (\mathbf{w} \cdot \boldsymbol{\Gamma} \cdot \mathbf{w}) \\ avec \\ \mathbf{C}^H \cdot \mathbf{w} = \mathbf{f} \end{cases}$$

où la matrice C de dimension N x $n_c$ représente les $n_c$ contraintes à satisfaire pour préserver le diagramme d'antenne, le vecteur f de dimension N contient les valeurs de contraintes. Les contraintes peuvent notamment se traduire par la conservation d'un gain suffisant dans la direction d'observation du radar et par le contrôle du niveau des lobes secondaires du diagramme d'antenne. L'objectif du traitement d'antibrouillage étant d'augmenter le rapport signal à bruit du signal utile, il faut en effet veiller à diminuer l'amplitude des signaux brouilleurs sans altérer la réception des signaux recherchés.

La solution obtenue en utilisant les multiplicateurs de Lagrange donne :

$$\mathbf{w} = \mathbf{\Gamma}^{-1} \cdot \mathbf{C} \cdot \left(\mathbf{C}^H \cdot \mathbf{\Gamma}^{-1} \cdot \mathbf{C}\right)^{-1} \cdot \mathbf{f} \qquad (2)$$

c'est à dire en appliquant l'opérateur hermitien :

$$\mathbf{w}^H = \mathbf{f}^H \cdot \left(\mathbf{C}^H \cdot \mathbf{\Gamma}^{-1} \cdot \mathbf{C}\right)^{-1} \cdot \mathbf{C}^H \cdot \mathbf{\Gamma}^{-1} \qquad (3)$$

L'expression (3) est un vecteur de filtrage $w^H$ connu de l'homme du métier pour appliquer un traitement d'antibrouillage classique.

Le procédé d'antibrouillage selon l'invention permet notamment de fournir autant de voies d'antennes dépolluées que de sous-réseaux avec des besoins en calcul limités. A cet effet, l'invention a pour objet un procédé de filtrage de bruit pour radar à N sous-réseaux d'antennes utilisant une matrice de covariance r du bruit capté par les sous-réseaux, comportant au moins les étapes suivantes :

o calculer des coefficients $M_{ij}$ d'une matrice M à partir de la matrice de covariance de bruit $\Gamma$, d'un vecteur pondérateur $w_r$ représentant un diagramme d'antenne souhaité à la réception en environnement non pollué, et de contraintes C, f de préservation de la forme de ce diagramme d'antenne, où M est égale à :

$$\frac{\mathbf{w}_r}{\mathbf{w}_r^H \cdot \mathbf{w}_r} \cdot \mathbf{f}^H \cdot \left(\mathbf{C}^H \cdot \mathbf{\Gamma}^{-1} \cdot \mathbf{C}\right)^{-1} \cdot \mathbf{C}^H \cdot \mathbf{\Gamma}^{-1}$$

o calculer, à travers un produit matrice-vecteur entre la matrice M et un vecteur de signaux $x_i$ reçus par les sous-réseaux d'antennes, une combinaison linéaire des N signaux $x_i$ avec les coefficients $M_{ij}$ pour générer N signaux $x_i'$ filtrés.

D'autres caractéristiques et avantages de l'invention apparaîtront à la lecture de la description détaillée donnée à titre d'exemple et non limitative qui suit faite en regard de dessins annexés qui représentent :

■ l'unique figure, une illustration du procédé de dépollution de signaux selon l'invention.

Par la suite, les signaux indésirables sont assimilés à du brouillage et les traitements mis en oeuvre pour les contrer sont qualifiés « d'antibrouillage ». L'invention est également applicable à la dépollution de voies d'antennes captant d'autres types de signaux indésirables.

En l'absence de signaux brouilleurs, le diagramme d'antenne souhaité par l'utilisateur du radar est obtenu par l'application d'un vecteur pondérateur au repos $w_r$ sur les signaux $x_i$ captés par les sous-réseaux d'antennes. Autrement dit, sans brouillage, le signal acheminé par la voie somme *y* est donné par :

$$y = \mathbf{w}_r^H \cdot x \qquad (4)$$

En outre, on peut introduire le vecteur pondérateur au repos $w_r$ dans l'expression (3) sans la modifier. Ceci est réalisé à travers une multiplication du terme de droite par la fraction unitaire $\dfrac{\mathbf{w}_r^H \cdot \mathbf{w}_r}{\mathbf{w}_r^H \cdot \mathbf{w}_r}$ :

$$\mathbf{w}^{H} = \frac{\mathbf{w}_{r}^{H} \cdot \mathbf{w}_{r}}{\mathbf{w}_{r}^{H} \cdot \mathbf{w}_{r}} \cdot \mathbf{f}^{H} \cdot \left(\mathbf{C}^{H} \cdot \mathbf{\Gamma}^{-1} \cdot \mathbf{C}\right)^{-1} \cdot \mathbf{C}^{H} \cdot \mathbf{\Gamma}^{-1} \qquad (5)$$

En réécrivant l'expression (5), comme suit :

$$\mathbf{w}^{H} = \mathbf{w}_{r}^{H} \cdot \left( \frac{\mathbf{w}_{r}}{\mathbf{w}_{r}^{H} \cdot \mathbf{w}_{r}} \cdot \mathbf{f}^{H} \cdot \left(\mathbf{C}^{H} \cdot \mathbf{\Gamma}^{-1} \cdot \mathbf{C}\right)^{-1} \cdot \mathbf{C}^{H} \cdot \mathbf{\Gamma}^{-1} \right) \qquad (6)$$

on fait alors apparaître le vecteur de filtrage w comme le résultat d'une opération de transformation du vecteur pondérateur au repos $w_r$ par une matrice M :

$$\mathbf{w}^{H} = \mathbf{w}_{r}^{H} \cdot M \qquad (7)$$

avec

$$\mathbf{M} = \frac{\mathbf{w}_{r}}{\mathbf{w}_{r}^{H} \cdot \mathbf{w}_{r}} \cdot \mathbf{f}^{H} \cdot \left(\mathbf{C}^{H} \cdot \mathbf{\Gamma}^{-1} \cdot \mathbf{C}\right)^{-1} \cdot \mathbf{C}^{H} \cdot \mathbf{\Gamma}^{-1} \qquad (8)$$

Le vecteur de filtrage $w^H$ optimal selon les critères définis par l'algorithme LCMV peut donc être exprimé comme la transformation du vecteur au repos $w_r$ par une matrice M dépendant des contraintes ($C$, $f$) précitées, de la matrice de covariance r de bruit et du vecteur pondérateur au repos $w_r$. En conséquence, et d'après les expressions (1) et (7), le filtrage des signaux $x_i$ issus des voies d'antennes devient :

$$y = \mathbf{w}_{r}^{H} \cdot M \cdot x \qquad (9)$$

L'expression (9) montre que la matrice M peut être considérée comme une matrice d'antibrouillage. En effet,

i. la forme du diagramme d'antenne souhaitée par l'utilisateur dans le cas d'une réception non brouillée est formulée dans le vecteur pondérateur au repos $w_r$,
ii. une forme sensiblement identique du diagramme d'antenne — mais néanmoins adaptée à une réception dépolluée — est obtenue en environnement brouillé par l'application d'un vecteur de filtrage $w^H$ résultant d'une transformation des coefficients pondérateurs de $w_r$ par la matrice M.

Selon la présence de brouillage ou non, le signal acheminé par la voie somme $y$ prend ainsi respectivement les expressions (4) ou (9) :

o sans brouillage, $y = W^H_r \cdot x$,
o avec brouillage et traitement antibrouillage, $y = W^H_r \cdot M \cdot x$,

L'expression (9) peut être vue comme le produit entre un vecteur ($W^H_r \cdot M$) de pondération intégrant un traitement d'antibrouillage avec le vecteur x de signaux captés par les antennes :

$$y = (\mathbf{w}_{r}^{H} \cdot M) \cdot x$$

Mais l'expression (9) peut également être vue comme un produit entre le vecteur pondérateur au repos $w_r$ avec un vecteur x' de signaux dépollués :

$$y = \mathbf{w}_r^H \cdot (M \cdot x) = \mathbf{w}_r^H \cdot x'.$$

Cette seconde interprétation montre que l'application de coefficients pondérateurs issus de la matrice d'antibrouillage M sur les signaux $x_i$ perçus par les antennes aboutit à la formation de N voies de signaux $x_i$' dépollués, comme détaillé ci-après :

$$x' = \begin{bmatrix} x_1' \\ M \\ x_k' \\ M \\ x_n' \end{bmatrix} = M \cdot x = \begin{bmatrix} M_{11} & \Lambda & \Lambda & M_{1n} \\ M & & & M \\ M_{k1} & & & M_{kn} \\ M & & & M \\ M_{n1} & \Lambda & \Lambda & M_{nn} \end{bmatrix} \cdot \begin{bmatrix} x_1 \\ M \\ x_k \\ M \\ x_n \end{bmatrix} = \begin{bmatrix} M_{11} \cdot x_1 + \Lambda + M_{1n} \cdot x_n \\ M \\ M_{k1} \cdot x_1 + \Lambda + M_{kn} \cdot x_n \\ M \\ M_{n1} \cdot x_1 + \Lambda + M_{nn} \cdot x_n \end{bmatrix} \quad (10)$$

Les coefficients pondérateurs $M_{ij}$ d'antibrouillage présents dans la $i^{ème}$ ligne de la matrice M sont utilisés pour produire le $i^{ème}$ signal $x_i$' dépollué. Les coefficients pondérateurs $M_{ij}$ appliqués aux signaux $x_j$ dépendent :

- de la forme du diagramme d'antenne, information contenue dans le vecteur pondérateur au repos $w_r$,
- des contraintes de préservation de ce diagramme d'antenne, informations contenues dans la matrice C et le vecteur f,
- de la configuration de l'environnement de brouillage, information contenue dans la matrice de covariance $\Gamma$ de bruit.

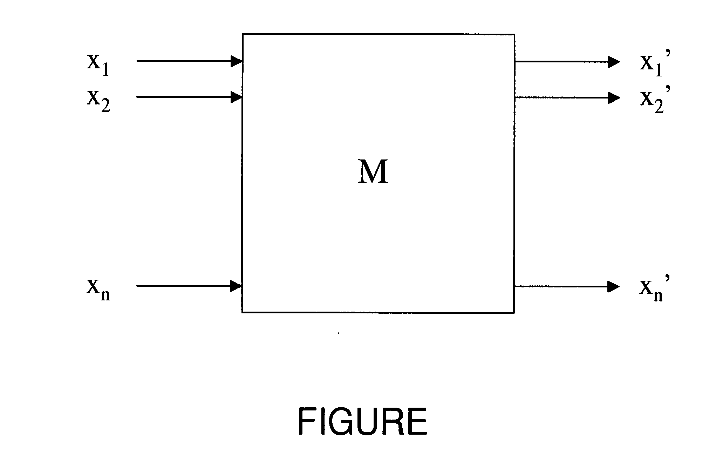

La figure 1 illustre le procédé de dépollution de signaux selon l'invention. Une fois un diagramme d'antenne et ses contraintes de préservation ($C$, $f$) choisis et une matrice de covariance $\Gamma$ de bruit déterminée, la matrice d'antibrouillage M peut être aisément calculée par application de l'expression (8). Une fois la matrice d'antibrouillage $M$ calculée, il suffit de la multiplier (10) avec les signaux $x_i$ reçus par les sous-réseaux d'antennes. La combinaison linéaire des coefficients pondérateurs $M_{ij}$ avec les signaux $x_i$ génère N signaux $x_i$' dépollués. Le procédé d'antibrouillage est centralisé puisque la seule matrice d'antibrouillage $M$ suffit à opérer la dépollution des voies de sous-réseaux.

Le vecteur $W^H_r$ présent dans l'expression (9) est un sommateur. Un produit de ce sommateur $W^H_r$ avec le vecteur $x'$ de signaux dépollués ramène les N signaux $x_i$' dépollués à un seul « signal somme » dépollué.

Pour un mode de réception donné, lorsque l'environnement brouilleur reste invariable dans le temps, il n'est pas besoin de recalculer la matrice d'antibrouillage $M$. Dans le cas contraire, la matrice d'antibrouillage $M$ peut par exemple être recalculée périodiquement pour suivre la configuration de brouillage.

Selon une variante de l'invention, le calcul d'antibrouillage (10) est parallélisé. Chaque signal dépollué $x'$ peut être calculé indépendamment des autres, ce qui autorise à exécuter parallèlement les opérations arithmétiques de produit scalaire entre une ligne de la matrice d'antibrouillage $M$ avec le vecteur $x$.

Par ailleurs, une désactivation du traitement antibrouillage revient à imposer une matrice d'antibrouillage $M$ égale à la matrice identité.

Un avantage du procédé d'antibrouillage centralisé selon l'invention est qu'il rend les signaux dépollués réutilisables pour effectuer des traitements d'exploitation tels que des traitements adaptatifs spatio-temporels. De plus, le procédé d'antibrouillage lui-même n'est lié en aucune manière à un post-traitement particulier, ce qui permet de conserver une décorrelation entre la chaîne de réception et une chaîne d'exploitation placée en aval.

Un autre avantage du procédé selon l'invention est le faible coût en calcul requis, rendant ainsi le procédé utilisable dans des systèmes embarqués nécessitant un fonctionnement en temps réel. En effet, une fois la matrice d'antibrouillage calculée, le traitement d'antibrouillage est effectué en une étape de calculs (10) consistant en un produit matrice-vecteur. De plus, une parallélisation du traitement d'antibrouillage sur les N voies de sous-réseaux d'antennes permet de diviser sensiblement par N le temps nécessaire au calcul des signaux dépollués.

Par ailleurs, l'implantation du procédé selon l'invention dans une chaîne de réception radar existante est quasi transparente. En effet, le procédé d'antibrouillage ne nécessite pas de modifier l'architecture de la chaîne de réception puisque les N signaux issus des sous-réseaux d'antennes sont transformés en N signaux d'antennes dépollués. Un utilisateur ayant déjà prédéfini plusieurs modes de réception multivoies, c'est à dire plusieurs formes de diagramme d'antenne, peut insérer le procédé d'antibrouillage dans la chaîne de réception et réutiliser les modes de réception. En outre, le remplacement d'un procédé d'antibrouillage selon l'art antérieur exposé plus haut par le procédé selon l'invention n'affecte pas l'architecture de la chaîne de réception, puisque l'application du vecteur sommateur $W^H_r$ sur les signaux dépollués permet d'obtenir un signal de voie somme, comme pour un antibrouillage classique.

Enfin, il est possible d'activer et de désactiver le traitement d'antibrouillage sans modifier la chaîne de réception radar, une désactivation du traitement antibrouillage étant très simplement opérée par l'imposition d'une matrice identité en guise de matrice d'antibrouillage.

**Revendications**

1. Procédé de filtrage de bruit pour radar à N sous-réseaux d'antennes utilisant une matrice de covariance r du bruit capté par les sous-réseaux, **caractérisé en ce qu'**il comporte au moins les étapes suivantes :

   o calculer des coefficients $M_{ij}$ d'une matrice M à partir de la matrice de covariance de bruit $\Gamma$, d'un vecteur pondérateur $w_r$ représentant un diagramme d'antenne souhaité à la réception en environnement non pollué, et de contraintes C, f de préservation de la forme de ce diagramme d'antenne, où M est égale à :

$$\frac{\mathbf{w}_r}{\mathbf{w}^H_r \cdot \mathbf{w}_r} \cdot \mathbf{f}^H \cdot \left(\mathbf{C}^H \cdot \mathbf{\Gamma}^{-1} \cdot \mathbf{C}\right)^{-1} \cdot \mathbf{C}^H \cdot \mathbf{\Gamma}^{-1}$$

   o calculer, à travers un produit matrice-vecteur entre la matrice M et un vecteur de signaux $x_i$ reçus par les sous-réseaux d'antennes, une combinaison linéaire des N signaux $x_i$ avec les coefficients $M_{ij}$ pour générer N signaux $x_i$' filtrés.

2. Procédé de filtrage de bruit selon la revendication 1, **caractérisé en ce que** le produit matrice-vecteur est parallélisé en plusieurs produits scalaires effectués entre une ligne de la matrice M et le vecteur de signaux $x_i$.

3. Procédé de dépollution de signaux selon l'une des revendications précédentes, **caractérisé en ce que** la matrice M est recalculée périodiquement pour suivre la configuration de brouillage.

**Claims**

1. A method for filtering noise for radar with N sub-arrays of antennae using a covariance matrix $\Gamma$ of the noise captured by said sub-arrays, **characterised in that** it comprises at least the following steps:

   - calculating coefficients $M_{ij}$ of a matrix M on the basis of the noise covariance matrix $\Gamma$, of a weighting vector $w_r$ representing an antenna pattern required on receipt in a clean environment, and constraints C, f for preserving the shape of said antenna pattern, where M is equal to:

$$\frac{\mathbf{w}_r}{\mathbf{w}^H_r \cdot \mathbf{w}_r} \cdot \mathbf{f}^H \cdot \left(\mathbf{C}^H \cdot \mathbf{\Gamma}^{-1} \cdot \mathbf{C}\right)^{-1} \cdot \mathbf{C}^H \cdot \mathbf{\Gamma}^{-1}$$

   - calculating, through a matrix-vector product between the matrix M and a vector of signals $x_i$ received by the sub-arrays of antennae, a linear combination of N signals $x_i$ with the coefficients $M_{ij}$ to generate N filtered signals $x_i$'.

2. The noise filtering method according to claim 1, **characterised in that** the matrix-vector product is parallelised as several scalar products performed between a line of the matrix M and the vector of signals $x_i$.

3. The method for cleaning signals according to any one of the preceding claims, **characterised in that** the matrix M is periodically recalculated so as to follow the jamming configuration.

**Patentansprüche**

1. Verfahren zum Filtern von Rauschen für ein Radar mit N Antennenteilnetzen mit Hilfe einer Kovarianzmatrix $\Gamma$ des von den Teilnetzen erfassten Rauschens, **dadurch gekennzeichnet, dass** es wenigstens die folgenden Schritte beinhaltet:

   - Berechnen von Koeffizienten $M_{ij}$ einer Matrix M auf der Basic der Rauschkovarianzmatrix $\Gamma$ eines Gewichtungsvektors $w_r$, der ein beim Empfang in einer reinen Umgebung gewünschtes Antennendiagramm repräsentiert, und von Bedingungen C, f zum Konservieren der Form dieses Antennendiagramms, wobei M wie folgt ist:

$$\frac{w_r}{w_r^H \cdot w_r} \cdot f^H \cdot \left(C^H \cdot \Gamma^{-1} \cdot C\right)^{-1} \cdot C^H \cdot \Gamma^{-1}$$

   - Berechnen, über ein Matrix-Vektor-Produkt zwischen der Matrix M und einem Vektor von von den Antennenteilnetzen empfangenen Signalen $x_i$, einer linearen Kombination von N Signalen $x_i$ mit den Koeffizienten $M_{ij}$ zum Erzeugen von N gefilterten Signalen $x_i'$.

2. Rauschfilterungsverfahren nach Aspruch 1, **dadurch gekennzeichnet, dass** das Matrix-Vektor-Produkt zwischen einer Linie der Matrix M und dem Vektor der Signale $x_i$ in mehrere skalare Produkte parallelisiert wird.

3. Verfahren zum Reinigen von Signalen nach einem der vorherigen Ansprüche, **dadurch gekennzeichnet, dass** die Matrix M periodisch neu berechnet wird, um der Jamming-Konfiguration zu folgen.

FIGURE